# FASCICULE DE BREVET EUROPEEN

(11) **EP 2 233 243 B1**
(45) Date de publication et mention de la délivrance du brevet: **28.12.2011**
(21) Numéro de dépôt: 10290149.3
(22) Date de dépôt: 22.03.2010
(51) Int. Cl.: B23Q 1/26, B23Q 5/40, F16H 25/24, H02K 7/06

(54) **Mécanisme d'entraînement d'un organe de travail à courses linéaires respectivement rapide et lente**
Antriebsmechanismus von einem Arbeitsorgan für lineare beziehungsweise schnelle und langsame Wege
Drive mechanism of a working part of a device for linear, fast and slow strokes

(30) Priorité: 23.03.2009 FR 0901329
(43) Date de publication de la demande: 29.09.2010
(73) Titulaire: Breiter, Martin, 75020 Paris (FR)
(72) Inventeur: Breiter, Martin, 75020 Paris (FR)
(74) Mandataire: Hammond, William

(56) Documents cités:
- EP-A- 0 569 775
- DE-A1- 3 309 305
- DE-B3-102005 007 205
- DE-U1- 9 105 224
- FR-A- 1 198 775
- FR-A- 2 117 192
- FR-A- 2 522 764

## Description

L'invention concerne un mécanisme d'entraînement d'un organe de travail à courses linéaires respectivement rapide et lente.

De nombreuses applications industrielles font appel à des mécanismes d'entraînement d'un organe de travail, qui sont aménagés pour générer une course rapide d'approche dudit organe de travail, suivie, ou précédée d'une course lente de travail.

En effet, la course lente de travail d'un vérin ou d'un outil par exemple, exige généralement des forces de poussée plus élevées que la simple course d'approche effectuée avant tout travail dudit vérin ou outil. De la sorte, on gagne du temps sur le cycle de fonctionnement en réalisant une course rapide durant laquelle aucun effort particulier n'est requis. C'est par exemple le cas des vérins d'actionnement, des pinces, des systèmes de serrage, des étaux, des presses, etc.

Dans ce qui suit il faudra prendre le mot « organe de travail » dans son acception la plus large c'est-à-dire susceptible de désigner tout élément ou unité mobile capable d'actionner une mécanique ou constituer un porte-outil.

Pour des raisons techniques ou économiques les dispositifs précités connus sont généralement commandés par des moyens pneumatiques.

Pour des appareils à commande électrique, mieux adaptés pour certaines applications, il était alors jusqu'ici nécessaire d'utiliser un mécanisme sophistiqué ou un asservissement électronique onéreux.

Le document FR-A-2 117 192 décrit un mécanisme d'entraînement d'un organe de travail à courses linéaires respectivement rapide et lente comportant au moins un moyen de guidage linéaire pour l'organe de travail, au moins un système vis-écrou à liaison hélicoïdale dont la vis est entraînée en rotation et au moins un écrou qui est solidarisé en translation avec ledit organe de travail, tandis que le diamètre sur flancs de l'écrou est légèrement supérieur à celui de la vis, que l'axe de la vis est décalé parallèlement par rapport à celui de l'écrou de telle sorte que les filets de la vis et de l'écrou coopèrent entre eux, et que l'écrou est monté libre en rotation autour de la vis, un moyen de blocage étant par ailleurs prévu pour bloquer à volonté la rotation de l'écrou, ce qui permet de générer une course de l'organe de travail plus lente que celle obtenue lorsque l'écrou est libre en rotation.

Toutefois, ce dispositif ne présente aucun automatisme pour le passage notamment d'une vitesse à l'autre.

C'est pourquoi le demandeur propose un mécanisme du type précité, mais amélioré et qui remédie à l'inconvénient susmentionné. Le mécanisme selon l'invention est remarquable en ce que le moyen de blocage de la rotation de l'écrou est aménagé pour bloquer en rotation ledit écrou jusqu'à ce que l'organe de travail rencontre une résistance au déplacement supérieure à un certain seuil au-delà duquel ledit moyen de blocage supprime son action de blocage rendant alors la rotation de l'écrou libre.

Un mode de réalisation particulier est remarquable en ce que l'écrou est monté dans un porte-écrou lui-même aménagé avec un léger jeu translatif par rapport à l'organe de travail au moins d'un côté, et en ce que le moyen de blocage en rotation comporte au moins un moyen d'actionnement prévu pour solliciter au moins un moyen de freinage monté dans le porte-écrou et destiné à venir freiner et bloquer l'écrou en rotation tandis qu'une résistance au déplacement de l'organe de travail supérieure au seuil prévu, entraîne un déplacement relatif du porte-écrou par rapport audit organe de travail correspondant audit jeu translatif de montage et une action d'une partie appropriée du porte-écrou sur le moyen d'actionnement entraînant un déblocage du moyen de freinage.

Par exemple dans ce cas, le porte-écrou est monté avec un léger jeu translatif par rapport à l'organe de travail, à l'aide d'au moins un tirant solidaire de l'organe de travail, tandis que le moyen d'actionnement du moyen de blocage se présente sous la forme d'un poussoir qui est monté de manière coulissante sur ledit tirant en étant sollicité par au moins un moyen élastique à venir agir sur le moyen de freinage sous forme d'un sabot de telle sorte qu'une résistance au déplacement de l'organe de travail supérieure à la sollicitation dudit moyen élastique entraîne un déplacement relatif du porte-écrou par rapport à l'organe de travail et de ce fait un déplacement du poussoir à l'encontre de son moyen élastique.

Selon un mode de réalisation du type précité, le moyen de blocage en rotation comporte pour chaque sabot de freinage deux poussoirs respectivement avant et arrière par rapport au sens de déplacement de l'organe de travail, de telle sorte qu'une résistance à l'avancement de l'organe de travail supérieure à la sollicitation du moyen élastique entraîne un déplacement du poussoir arrière par le porte-écrou alors que le poussoir avant vient en butée sur un élément fixe de l'organe de travail et par exemple, le ou les poussoirs viennent en butée sur l'organe de travail au moyen d'au moins un épaulement aménagé sur le ou les tirants.

On peut prévoir aussi que le porte-écrou soit aménagé avec un léger jeu translatif des deux côtés et que le moyen de blocage comporte au moins une paire de poussoirs d'actionnement de telle sorte que ledit organe de travail puisse passer d'une vitesse rapide à une vitesse lente en se déplaçant dans un sens ou dans l'autre selon le sens de rotation de la vis.

En outre, si on le souhaite, le moyen de blocage en rotation de l'écrou par rapport à l'organe de travail peut être commandé par un moyen de commande extérieur afin de passer à volonté de la vitesse rapide à la vitesse lente et vice versa.

Comme déjà dit, l'organe de travail peut être de toute nature et en particulier constitué par une tige de vérin.

Dans ce cas par exemple, la tige de vérin se prolonge par un tirant sur lequel le porte-écrou est monté de manière coulissante, celui-ci étant par ailleurs guidé linéairement dans un carter extérieur.

A la place de la tige de vérin, il est possible aussi que l'organe de travail comporte un chariot qui est monté sur des moyens de guidage et dans lequel est monté de manière coulissante le porte-écrou.

Le chariot peut notamment constituer un porte-outil.

L'invention sera bien comprise à la lecture de la description qui va suivre et qui se réfère aux dessins annexés dans lesquels :
- la figure 1 montre en coupe axiale un mécanisme d'entraînement selon l'invention pour une tige de vérin, représenté en position de course rapide,
- la figure 2 est une coupe transversale selon II-II de la figure 1,
- la figure 3 correspond à la figure 1, le mécanisme étant par contre représenté en position de course lente,
- la figure 4 correspond à la figure 1 mais montre un autre mode de réalisation dans lequel l'organe de travail comporte un chariot, les éléments identiques ou similaires portant les mêmes références,
- la figure 5 est une coupe transversale selon V-V de la figure 4.

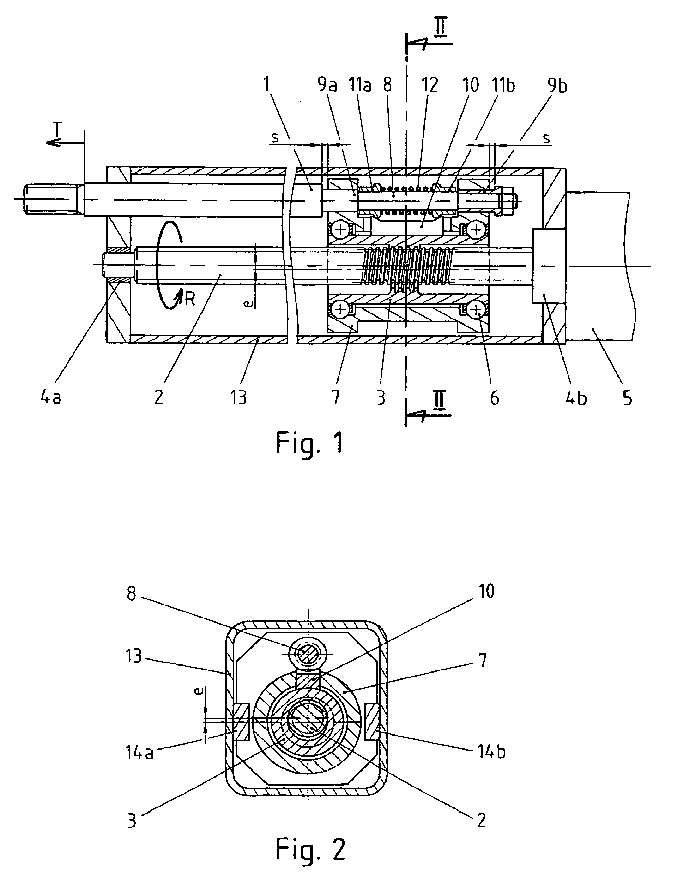

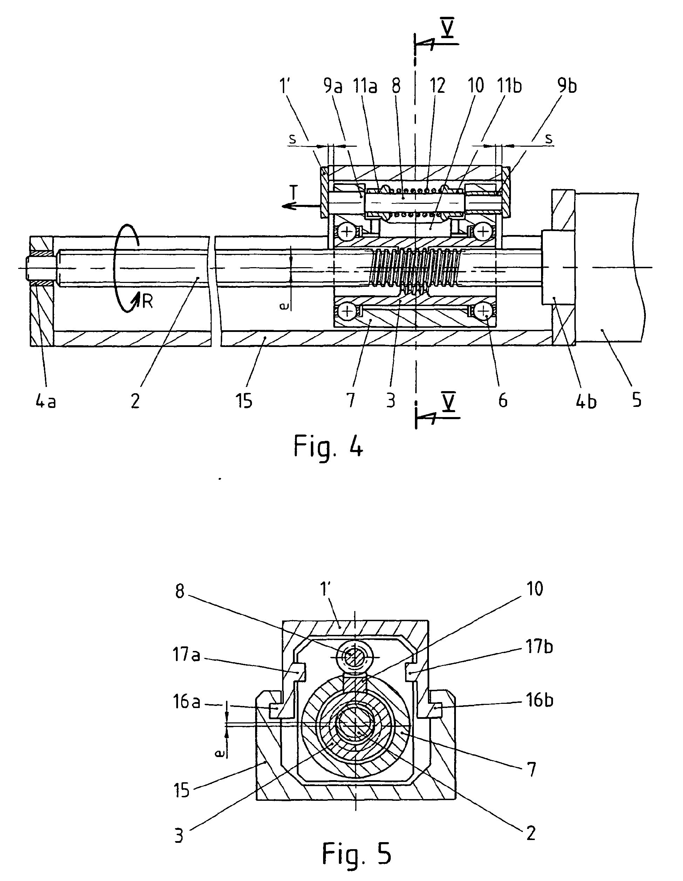

Les dessins montrent un organe de travail 1, 1' monté mobile et guidé linéairement comme il sera décrit ci-après. Sur les figures 1 à 3, l'organe de travail est une tige de vérin 1 et sur les figures 4 et 5 un chariot 1' porte-outil par exemple.

L'organe de travail 1,1' est entraîné en mouvement linéaire par au moins un système écrou-vis à liaison hélicoïdale, à savoir une vis d'entraînement 2 et un écrou 3 avec des filetages de type par exemple trapézoïdal.

La vis 2 est montée mobile en rotation entre deux paliers 4a, 4b, tandis qu'elle est entraînée en rotation par un moteur 5 (figures 1 et 3, 4).

Dans les modes de réalisation représentés, l'écrou 3 est monté libre en rotation au moyen ici de cages à billes 6 dans un porte-écrou 7 sous forme d'une bague extérieure tandis qu'un moyen de blocage est prévu et dont il sera question ci-après, pour solidariser en rotation l'écrou 3 et le porte-écrou 7.

Le porte-écrou 7 est monté légèrement mobile en translation par rapport à l'organe de travail 1,1' et il est guidé linéairement au moyen ici d'un tirant 8 (il pourrait bien sûr y en avoir plusieurs) solidarisé à l'organe de travail 1,1' et pourvu de douilles d'extrémité respectivement 9a, 9b, sur lesquelles coulisse le porte-écrou 7 comme le montrent les figures 1, 3 et 4.

Dans le mode de réalisation des figures 1 à 3, le tirant 8 est constitué par un prolongement de la tige de vérin 1 et dans le mode de réalisation des figures 4 et 5 le tirant 8 est solidarisé au chariot 1'.

Par ailleurs, comme le montrent les figures 1, 3 et 4, ledit porte-écrou 7 est monté avec un jeu translatif (s) de chaque côté par rapport à l'organe de travail.

Comme le montrent bien toutes les figures, le diamètre sur flanc (c'est-à-dire sensiblement à mi-filet) de l'écrou 3 est légèrement plus grand que celui de la vis 2.

En outre, l'axe de la vis 2 est décalé parallèlement par rapport à celui de l'écrou 3 d'une valeur (e) qui correspond à la différence entre les diamètres sur flanc précités de l'écrou 3 et de la vis 2 de telle sorte, comme le montrent les dessins, que les filets de la vis et de l'écrou coopèrent entre eux.

De plus, on peut constater que l'écrou 3 peut être bloqué en rotation par rapport à l'organe de travail 1,1' via le porte-écrou 7.

A cet effet, dans le mode de réalisation représenté, on a prévu un sabot de freinage 10 monté de manière mobile dans une fente appropriée du porte-écrou 7, tandis que sur le tirant 8 sont montés des poussoirs d'actionnement respectivement 11a, 11b entre lesquels est disposé un ressort 12 qui sollicite lesdits poussoirs, grâce à leur forme et celle du sabot, à pousser ledit sabot au contact de la surface extérieure de l'écrou 3 pour le freiner et le bloquer, comme le montrent les figures 1, 2, 4 et 5.

II est toutefois clair qu'il faut prendre le mot « poussoir » dans son acception la plus large et il pourrait être d'une autre forme ou d'une autre nature que celle représentée. En particulier, il pourrait être sphérique, c'est-à-dire sous forme d'une bille.

Dans le mode de réalisation des figures 1 à 3, la tige de vérin 1 est guidée linéairement via son porte-écrou 7, lui-même guidé dans un carter extérieur 13 muni par exemple de glissières 14a, 14b (figure 2) destinées à coopérer avec des rainures conjuguées du porte-écrou 7.

Dans le mode de réalisation des figures 4 et 5, la chariot 1' est guidé linéairement dans un guide extérieur 15, le chariot 1' étant pourvu de glissières 16a, 16b (figure 5) destinées à coopérer avec des rainures conjuguées du guide 15 et dans cet exemple, de glissières complémentaires 17a, 17b pour le porte-écrou 7. Les moyens de guidage pourraient bien entendu être tout autre.

Suite à cette description, on peut comprendre le fonctionnement d'un mécanisme selon l'invention.

Comme déjà dit, le mécanisme est représenté en position de course rapide dans les figures 1, 2 et 4, 5.

Dans cette position, l'écrou 3 est bloqué par le sabot de freinage 10 sollicité par les poussoirs 11 a, 11 b et le ressort 12, les formes desdits poussoirs et du sabot étant adaptées comme déjà dit pour que les poussoirs agissent sur ledit sabot comme le feraient dans cet exemple des coins.

De la sorte, la vis 2 étant entraînée en rotation selon la flèche R par le moteur 5, alors que l'écrou 3 est bloqué, le porte-écrou 7 et l'organe de travail 1,1' sont alors classiquement entraînés en translation selon la flèche T avec un pas d'avancement qui correspond au pas réel de la vis 2, la vitesse d'avancement résultant de la vitesse de rotation de ladite vis 2 et de son pas.

Cette configuration représente donc la vitesse rapide d'approche de la tige du vérin 1 ou du chariot 1' porte-outil constituant par exemple en partie une pince, une presse ou autre selon l'application choisie.

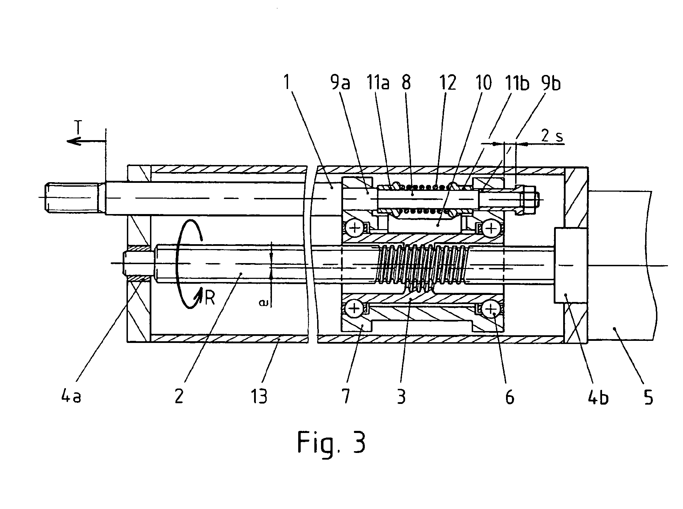

Par contre, dès que l'organe de travail 1,1' rencontre une résistance supérieure à l'effort exercé par le ressort 12 sur les poussoirs 11a, 11b, l'organe de travail 1,1' s'arrête dans un premier temps alors que le porte-écrou 7 continue à avancer en coulissant sur le tirant 8, de telle sorte qu'une partie appropriée du porte-écrou 7 pousse sur le poussoir arrière 11 b (par rapport au sens de l'avancement), comme le montre la figure 3, le poussoir avant 11a, étant retenu par la douille d'extrémité avant 9a du tirant.

Le porte-écrou 7 comble ainsi le jeu (s) vers l'avant qui existe entre lui et l'organe de travail, ce jeu devenant (2s) vers l'arrière (figure 3), tandis que la compression du ressort 12 entraîne le déblocage du sabot de freinage 10 et la liberté pour l'écrou 3 de tourner dans le même sens de rotation que la vis 2, avec qui il est entraîné par friction.

Du fait de la différence (e) entre les diamètres de la vis 2 et de l'écrou 3, ledit écrou 3 tourne alors plus lentement que ladite vis 2 de telle sorte que le pas apparent du système par tour de vis est diminué de la valeur d'avancement relatif de l'écrou.

On a donc bien dans cette configuration de la figure 3 une course lente de l'organe de travail obtenue suite à une augmentation sensible de la résistance d'avancement de ce dernier entraînant de ce fait une augmentation de la force de travail.

Si la figure 3 montre le mécanisme en position de vitesse lente pour la tige de vérin 1, on comprend aisément que cette figure représente aussi le mécanisme d'entraînement en position de vitesse lente pour le chariot 1' des figures 4 et 5.

On comprend également que si, au contraire, la résistance à l'avancement de l'organe de travail 1,1' disparaît, l'écrou est de nouveau bloqué en rotation et ledit organe de travail repasse en vitesse rapide.

En outre, dans les modes de réalisation représentés (et donnés à titre d'exemples), on a prévu un jeu (s) du porte-écrou des deux côtés, de telle sorte que l'organe de travail peut passer d'une vitesse rapide à une vitesse lente et réciproquement quel que soit son sens de déplacement qui dépend du sens de rotation de la vis 2.

Bien d'autres moyens peuvent être prévus en remplacement des moyens décrits ou en ajout.

Le moyen de blocage en rotation du porte-écrou peut comporter plusieurs sabots ou être tout autre (magnétique, ou autrement). De même, on peut aussi prévoir un moyen de commande à distance du moyen de blocage pour passer à volonté d'une vitesse rapide à une vitesse lente, ou réciproquement, ce système de commande pouvant, par exemple, actionner un frein embarqué sur l'organe de travail, ...

Comme déjà dit, un mécanisme selon l'invention est susceptible d'un grand nombre d'applications en particulier dans les domaines de l'actionnement (tige de vérin), du serrage et du pressage.

Enfin, il est clair que le mécanisme particulier selon l'invention permettant une diminution du pas d'avancement peut être utilisé, si on le désire, uniquement en course lente afin de procurer directement un effort plus important et dans ce cas, le moyen de blocage n'est plus utile, l'écrou restant libre en rotation.

Pour beaucoup d'applications, l'organe de travail finit sa course sur une butée franche qui limite net la course d'approche. Un effort statique permanent est alors exigé. Habituellement, des vérins pneumatiques sont utilisés pour remplir cette fonction car ils présentent l'avantage de ne pas consommer d'énergie en position de blocage (pourvu que la pression pneumatique soit maintenue).

Moyennant un équipement complémentaire, l'invention peut également fonctionner de cette façon et remplacer avantageusement un vérin pneumatique.

Afin d'obtenir un comportement « vérin de serrage » avec un mécanisme selon l'invention, un moyen élastique précontraint tel un ressort par exemple, peut être prévu pour agir sur la vis d'entraînement 2.

Dans ce cas, la course lente de travail est utilisée pour contraindre ce moyen élastique.

En effet, quand l'organe de travail rencontre une butée franche, la vitesse de travail est enclenchée et elle engendre le déplacement axial de la vis 2 qui est, par exemple, maintenue coulissante dans le palier 4a et des roulements aménagés du côté du palier 4b.

Suite à un déplacement de la vis dans un sens ou l'autre et compression du moyen élastique, des détecteurs de position peuvent alors couper l'alimentation et ainsi maintenir l'organe de travail sous pression ou traction.

## Revendications

1. Mécanisme d'entraînement d'un organe de travail (1,1') à courses linéaires respectivement rapide et lente comportant au moins un moyen de guidage linéaire pour l'organe de travail, au moins un système vis-écrou à liaison hélicoïdale dont la vis (2) est entraînée en rotation et au moins un écrou (3) qui est solidarisé en translation avec ledit organe de travail (1,1'), tandis que le diamètre sur flancs de l'écrou (3) est légèrement supérieur à celui de la vis (2), que l'axe de la vis est décalé parallèlement par rapport à celui de l'écrou de telle sorte que les filets de la vis et de l'écrou coopèrent entre eux, et que l'écrou (3) est monté libre en rotation autour de la vis, un moyen de blocage étant par ailleurs prévu pour bloquer à volonté la rotation de l'écrou, ce qui permet de générer une course de l'organe de travail plus lente que celle obtenue lorsque l'écrou est libre en rotation, **caractérisé en ce que** le moyen de blocage de la rotation de l'écrou (3) est aménagé pour bloquer en rotation ledit écrou jusqu'à ce que l'organe de travail (1,1') rencontre une résistance au déplacement supérieure à un certain seuil au-delà duquel ledit moyen de blocage supprime son action de blocage rendant alors la rotation de l'écrou (3) libre.

2. Mécanisme d'entraînement selon la revendication 1, **caractérisé en ce que** l'écrou (3) est monté dans un porte-écrou (7) lui-même aménagé avec un léger jeu translatif (s) par rapport à l'organe de travail (1,1') au moins d'un côté, et **en ce que** le moyen de blocage en rotation comporte au moins un moyen d'actionnement prévu pour solliciter au moins un moyen de freinage monté dans le porte-écrou (7) et destiné à venir freiner et bloquer l'écrou (3) en rotation tandis qu'une résistance au déplacement de l'organe de travail (1,1') supérieure au seuil prévu, entraîne un déplacement relatif du porte-écrou (7) par rapport audit organe de travail correspondant audit jeu translatif (s) de montage et une action d'une partie appropriée du porte-écrou (7) sur le moyen d'actionnement entraînant un déblocage du moyen de freinage.

3. Mécanisme d'entraînement selon la revendication 2, **caractérisé en ce que** le porte-écrou (7) est monté avec un léger jeu translatif (s) par rapport à l'organe de travail (1,1'), à l'aide d'au moins un tirant (8) solidaire de l'organe de travail (1,1'), tandis que le moyen d'actionnement du moyen de blocage se présente sous la forme d'un poussoir (11a,11b) qui est monté de manière coulissante sur ledit tirant (8) en étant sollicité par au moins un moyen élastique (12) à venir agir sur le moyen de freinage sous forme d'un sabot (10) de telle sorte qu'une résistance au déplacement de l'organe de travail (1,1') supérieure à la sollicitation dudit moyen élastique (12) entraîne un déplacement relatif du porte-écrou (7) par rapport à l'organe de travail (1,1') et de ce fait un déplacement du poussoir (11a,11b) à l'encontre de son moyen élastique (12).

4. Mécanisme d'entraînement selon la revendication 3, **caractérisé en ce que** le moyen de blocage en rotation comporte pour chaque sabot de freinage (10) deux poussoirs (11a,11b) respectivement avant et arrière par rapport au sens de déplacement de l'organe de travail (1,1'), de telle sorte qu'une résistance à l'avancement de l'organe de travail supérieure à la sollicitation du moyen élastique (12) entraîne un déplacement du poussoir arrière (11b) par le porte-écrou (7) alors que le poussoir avant (11a) vient en butée sur un élément fixe (9a) de l'organe de travail (1,1').

5. Mécanisme d'entraînement selon l'une des revendications 3 et 4, **caractérisé en ce que** le ou les poussoirs (11a,11b) viennent en butée sur l'organe de travail (1,1') au moyen d'au moins un épaulement (9a,9b) aménagé sur le ou les tirants (8).

6. Mécanisme d'entraînement selon l'une des revendications 3 à 5, **caractérisé en ce que** le porte-écrou (7) est aménagé avec un léger jeu translatif (s) des deux côtés et que le moyen de blocage comporte au moins une paire de poussoirs d'actionnement (11a,11b) de telle sorte que ledit organe de travail (1,1') puisse passer d'une vitesse rapide à une vitesse lente en se déplaçant dans un sens ou dans l'autre selon le sens de rotation de la vis (2).

7. Mécanisme d'entraînement selon l'une quelconque des revendications 1 à 6, **caractérisé en ce que** le moyen de blocage en rotation de l'écrou (3) par rapport à l'organe de travail (1,1') peut être commandé par un moyen de commande extérieur afin de passer à volonté de la vitesse rapide à la vitesse lente et vice versa.

8. Mécanisme d'entraînement selon l'une quelconque des revendications 1 à 7, **caractérisé en ce que** l'organe de travail est constitué par une tige de vérin (1).

9. Mécanisme d'entraînement selon les revendications 3 et 8, **caractérisé en ce que** la tige de vérin (1) se prolonge par un tirant (8) sur lequel le porte-écrou (7) est monté de manière coulissante, celui-ci étant par ailleurs guidé linéairement dans un carter extérieur (13).

10. Mécanisme d'entraînement selon l'une quelconque des revendications 1 à 7, **caractérisé en ce que** l'organe de travail comporte un chariot (1') qui est monté sur des moyens de guidage (15,16a,16b) et dans lequel est monté de manière coulissante le porte-écrou (7).

## Claims

1. Drive mechanism of a working part (1, 1') with respectively fast and slow linear strokes comprising at least one linear guiding means for the working part, at least one screw and nut system connected by a helix the screw (2) of which is driven in rotation, and at least one nut (3) which is locked in translation with said working part (1, 1'), whereas the diameter at the flanks of the nut (3) is slightly greater than that of the screw (2), the axis of the screw is offset in parallel in relation to that of the nut such that the threads of the screw and the nut co-operate with one another, and the nut (3) is mounted free to rotate around the screw, a locking means also being provided to lock the rotation of the nut at will, which makes it possible to generate a stroke for the working part which is slower than that obtained when the nut is free to rotate, **characterised in that** the locking means for the rotation of the nut (3) is arranged to lock said nut in rotation until the working part (1, 1') encounters a resistance to movement greater than a certain threshold beyond which said locking means ends its locking action, so allowing the nut (3) to rotate freely.

2. Drive mechanism according to claim 1, **characterised in that** the nut (3) is mounted in a nut carrier (7) itself arranged with a slight translatory play (s) in relation to the working part (1, 1') on at least one side, and **in that** the rotational locking means comprises at least one actuating means designed to act on at least one braking means mounted in the nut carrier (7) and designed to brake and lock the nut (3) in rotation while a resistance to movement of the working part (1, 1') greater than the design threshold, leads to a relative movement of the nut carrier (7) in relation to said working part corresponding to said mounting translatory play (s) and action of an appropriate portion of the nut carrier (7) on the actuating means leading to unlocking of the braking means.

3. Drive mechanism according to claim 2, **characterised in that** the nut carrier (7) is mounted with a slight translatory play (s) in relation to the working part (1, 1') with the aid of at least one draw rod (8) locked to the working part (1, 1'), while the actuating means for the locking means takes the form of a thrust element (11a, 11b) which is mounted slidingly on said draw rod (8) while being subject to the action of at leas- one elastic means (12) so as to come to act on the braking means in the form of a shoe (10) such that a resistance to movement of the working part (1, 1') greater than the action of said elastic means (12) leads to a relative movement of the nut carrier (7) in relation to the working part (1, 1') and thus to a movement of the thrust element (11a, 11b) against its elastic means (12).

4. Drive mechanism according to claim 3, **characterised in that** for each braking shoe (10) the rotational locking means comprises two thrust elements (11a, 11b) respectively at the front and rear in relation to the direction of movement of the working part (1, 1'), such that a resistance to forward movement of the working part greater than the action of the elastic means (12) leads to a movement of the rear thrust element (11b) by the nut carrier (7) while the front thrust element (11a) comes up against a fixed element (9a) of the working part (1, 1').

5. Drive mechanism according to one of claims 3 and 4, **characterised in that** the thrust element or elements (11a, 11b) come up against the working part (1, 1') by means of at least one shoulder (9a, 9b) arranged on the draw rod or rods (8).

6. Drive mechanism according to one of claims 3 to 5, **characterised in that** the nut carrier (7) is arranged with a slight translatory play (s) on both sides and **in that** the locking means comprises at least one pair of actuating thrust elements (11a, 11b) such that said working part (1, 1') can pass from a fast speed to a slow speed while moving in one or other direction according to the direction of rotation of the screw (2).

7. Drive mechanism according to any one of claims 1 to 6, **characterised in that** the rotational locking means of the nut (3) in relation to the working part (1, 1') can be controlled by an external control means in order to pass at will from the fast speed to the slow speed and vice versa.

8. Drive mechanism according to any one of claims 1 to 7, **characterised in that** the working part is constituted by a cylinder rod (1).

9. Drive mechanism according to claims 3 and 8, **characterised in that** the cylinder rod (1) is extended by a draw rod (8) on which the nut carrier (7) is mounted slidingly, this also being guided linearly in an external housing (13).

10. Drive mechanism according to any one of claims 1 to 7, **characterised in that** the working part comprises a carriage (1') which is mounted on guiding means (15, 16a, 16b) and in which the nut carrier (7) is mounted slidingly.

## Patentansprüche

1. Antriebsmechanismus von einem Arbeitsorgan (1, 1') für lineare beziehungsweise schnelle und langsame Wege, umfassend mindestens ein lineares Führungsmittel für das Arbeitsorgan, ein schneckenförmig verbundenes Schraube-Mutter-System, wobei die Schraube (2) drehend angetrieben wird und mindestens eine Mutter (3) translatorisch mit dem Arbeitsorgan (1, 1) zusammengeschlossen ist, wobei der Durchmesser an Flanken der Mutter (3) geringfügig größer ist als der der Schraube (2), wobei die Achse der Schraube relativ zu jener der Mutter parallel derart versetzt ist, dass die Gewinde der Schraube und der Mutter zusammenwirken, und wobei die Mutter (3) frei drehbar um die Schraube montiert ist, wobei ferner ein Blockiermittel zum beliebigen Blockieren der Drehung der Mutter vorgesehen ist, das es erlaubt, einen Weg des Arbeitsorgans zu schaffen, der langsamer ist als jener, der erzielt wird, wenn die Mutter frei drehbar ist, **dadurch** gekenntzeichnet, dass das Mittel zum Blockieren der Drehung der Mutter (3) ausgebildet ist für das Blockieren der Drehung der Mutter, bis das Arbeitsorgan (1, 1') auf einen Bewegungswiderstand trifft, der größer ist als eine Schwelle, jenseits derer die Blockierwirkung des Blocklermittels aufgehoben und eine freie Drehung der Mutter (3) ermöglicht wird.

2. Antriebsmechanismus nach Anspruch 1, **dadurch gekennzeichnet, dass** die Mutter (3) in einem Mutterhalter (7) montiert ist, der seinerseits zumindest auf der einen Seite mit einem geringfügigen Translationsspiel (s) relativ zu dem Arbeitsorgan (1, 1') ausgebildet ist, und dass das Mittel zum Blockieren der Drehung mindestens ein Betätigungsmittel umfasst, das für den Antrieb von zumindest einem in dem Mutterhalter (7) montierten Bremsmittel vorgesehen und zum Bremsen und Blockieren der Drehung der Mutter (3) bestimmt ist, wobei ein Widerstand gegen die Verschiebung des Arbeitsorgans (1, 1'), der größer ist als die vorgesehene Schwelle, eine dem Montagespiel (s) der Translationsbewegung entsprechende Relativverschiebung des Mutterhalters (7) gegenüber dem Arbeitsorgan und eine Einwirkung eines geeigneten Abschnitts des Mutterhalters (7) auf das Betätigungsmittel eine Entsperrung des Bremsmittels bewirkt.

3. Antriebsmechanismus nach Anspruch 2, **dadurch** gekenntzeichnet, dass der Mutterhalter (7) mit Hilfe eines mit dem Arbeitsorgan (1, 1') fest verbundenen Zugankers (8) mit einem geringfügigen translatorischen Bewegungsspiel (s) gegenüber dem Arbeitsorgan (1, 1') montiert ist, während das Betätigungsmittel des Blockiermittels in Form einer Druckvorrichtung (11a, 11 b) vorgesehen ist, die gleitbeweglich an dem Zuganker (8) montiert ist und durch ein elastisches Mittel (12) in einer Weise beansprucht wird, dass es auf das Bremsmittel in Form eines Bremsschuhs (10) derart wirkt, dass ein Widerstand gegen die Verschiebung des Arbeitsorgans (1, 1'), der größer ist als die Beanspruchung des elastischen Mittels (12), eine Relativverschiebung des Mutterhalters (7) gegenüber dem Arbeitsorgan (1, 1') und aus diesem Grund eine Verschiebung der Druckvorrichtung (11a, 11b) gegen ihr elastisches Mittel (12) bewirkt.

4. Antriebsmechanismus nach Anspruch 3, **dadurch gekennzeichnet, dass** das Mittel zum Blockieren der Drehung für jeden Bremsschuh (10) zwei bezogen auf die Verschiebungsrichtung des Arbeitsorgans vordere bzw. hintere Druckvorrichtungen (11a, 11b) derart umfasst, dass ein Widerstand gegen den Vorschub des Arbeitsorgans, der höher ist als die Belastung des elastischen Mittels (12), eine Verschiebung der hinteren Druckvorrichtung (11 b) durch den Mutterhalter (7) bewirkt, während die vordere Druckvorrichtung (11a) an einem feststehenden Element (9a) des Arbeitsorgans (1, 1') zur Anlage kommt.

5. Antriebsmechanismus nach einem der Ansprüche 3 und 4, **dadurch gekennzeichnet**, das die Druckvorrichtung oder die Druckvorrichtungen (11a, 11b) über mindestens eine Schulter (9a, 9b), die an dem Zuganker oder an den Zugankern (8) ausgebildet ist, an dem Arbeitsorgan (1,1') zur Anlage kommen.

6. Antriebsmechanismus nach einem der Ansprüche 3 bis 5, **dadurch gekennzeichnet, dass** der Mutterhalter (7) beidseitig mit einem geringfügigen translatorischen Bewegungsspiel (s) vorgesehen ist und dass das Blockiermittel mindestens ein Paar von Betätigungs-Druckvorrichtungen (11a, 11b) umfasst, derart, dass das Arbeitsorgan (1, 1') bei seiner Verschiebung in seiner je nach Drehrichtung der Schraube (2) einen oder anderen Richtung mit einer schnellen bis langsamen Geschwindigkeit passieren kann.

7. Antriebsmechanismus nach einem der Ansprüche 1 bis 6, **dadurch gekennzeichnet, dass** das Mittel zum Blockieren der Drehung der Mutter (3) gegenüber dem Arbeitsorgan (1, 1') durch ein äußeres Steuerungsmittel gesteuert werden kann, um nach Belieben mit schneller bis langsamer Geschwindigkeit oder umgekehrt passieren zu können.

8. Antriebsmechanismus nach einem der Ansprüche 1 bis 7, **dadurch gekennzeichnet, dass** das Arbeitsorgan durch eine Schraubenspindel (1) gebildet wird.

9. Antriebsmechanismus nach den Ansprüchen 3 und 8, **dadurch gekennzeichnet, dass** sich die Schraubenspindel (1) durch einen Zuganker (8) verlängert, an dem der Mutterhalter (7) gleitbeweglich montiert ist, der im Übrigen in einem äußeren Gehäuse (13) linear geführt wird.

10. Antriebsmechanismus nach einem der Ansprüche 1 bis 7, **dadurch gekennzeichnet, dass** das Arbeitsorgan einen Schlitten (1') aufweist, der an Führungseinrichtungen (15, 16a, 16b) montiert ist und in dem der Mutterhalter (7) gleitbeweglich montiert ist.
